# EUROPEAN PATENT APPLICATION

(11) **EP 3 392 557 A1**
(43) Date of publication of application: **24.10.2018**
(21) Application number: 18167933.3
(22) Date of filing: 18.04.2018
(51) Int. Cl.: F21V 8/00

(54) **LIGHT GUIDE DEVICE**

(30) Priority: 21.04.2017 CN 201710266374
(71) Applicant: Foshan Ichikoh Valeo Auto Lighting Systems Co., Ltd., 528000 Foschan, Guangdong (CN)
(72) Inventor: NI, Zebin, FOSHAN, Guangdong 528000 (CN); XIANG, Zhixin, FOSHAN, Guangdong 528000 (CN)
(74) Representative: Khairallah, Murielle

(57) **Abstract**

Embodiments of the present application provide a light guide device. The light guide device includes: a light incidence portion and a light guide body, wherein the light incidence portion comprises: a first end having an end face with a shape of polygon for receiving an incident light; a second end arranged opposite to the first end and connected to the light guide body, the second end being arranged to direct the incident light from the first end into the light guide body; and a side surface arranged between the first end and the second end, the side surface including at least two sub-surfaces arranged side by side, wherein each of the at least two sub-surfaces extends from one side of the end face of the first end to the second end.

## Description

### BACKGROUND OF THE DISCLOSURE

### Field of the Disclosure

The present application relates to a light guide device.

### Description of the Related Art

A light guide device refers to a device that can direct a transmission of light therein mainly by internal total reflection. The light guide device is used widely in the fields such as lighting, light transmission. It may have a shape of for example a cylinder (may be called as light guide rod), a bar (may be called as light guide bar or lamp bar), plate (may be called as light guide plate), a ring (may be called as light guide ring), or the like. The light may typically be inputted into the light guide device from its one end and conducted to the other end or any desired exit position of the light guide device by the total reflection effect of an external wall of the light guide device. Due to the total reflection effect, the light having traveled in the light guide device for a sufficiently long distance tends to have a relatively uniform light distribution.

### SUMMARY

The present application is intended to provide a light guide device that can improve the uniformity and efficiency of coupling an incident light for the light guide device.

The present application provides a light guide device comprising: a light incidence portion and a light guide body, wherein the light incidence portion comprises: a first end having an end face with a shape of polygon for receiving an incident light; a second end arranged opposite to the first end and connected to the light guide body, the second end being arranged to direct the incident light from the first end into the light guide body; and a side surface arranged between the first end and the second end, the side surface comprising at least two sub-surfaces arranged side by side, wherein each of the at least two sub-surfaces extends from one side of the end face of the first end to the second end.

In an embodiment, each of the at least two sub-surfaces extends from one side of the end face of the first end to the second end along a direction inclined with respect to an axis of the light incidence portion.

In an embodiment, each of the at least two sub-surfaces has a first side at the first end of the light incidence portion and a second side at the second end of the light incidence portion, and wherein the second side revolves around an axis of the light incidence portion clockwise or anticlockwise by an angle greater than zero degree with respect to the first side.

In an embodiment, the second side revolves around the axis of the light incidence portion clockwise or anticlockwise by an angle greater than 10 degrees and less than 60 degrees with respect to the first side.

In an embodiment, the end face of the first end of the light incidence portion has a shape of regular polygon.

In an embodiment, the light incidence portion has a circular cross section at the second end and the circular cross section has a diameter greater than or equal to a diameter of a circumcircle of the end face of the first end.

In an embodiment, the shape of the cross section of the light incidence portion changes gradually from the regular polygon at the first end to the circle at the second end.

In an embodiment, a diameter of a circumcircle of a cross section of the light incidence portion increases gradually from the first end to the second end.

In an embodiment, a diameter of a circumcircle of a cross section of the light incidence portion is substantially constant.

In an embodiment, the end face of the first end has 4 to 16 sides.

In an embodiment, the sub-surfaces are three dimensional curved surfaces.

In an embodiment, at least one sub-surface of the at least two sub-surfaces is arranged to totally reflect the incident light from the first end to another sub-surface of the at least two of sub-surfaces.

In an embodiment, the light guide body has a circular cross section.

In an embodiment, a decoupling structure is provided on a side wall of the light guide body.

In an embodiment, a decoupling surface is provided on a side of the side wall opposite to the decoupling structure.

With the light guide device as described in the above at least one embodiment of the present application, at least two sub-surfaces are provided at the light incidence portion, and thus the uniformity of light intensity distribution and optical efficiency can be increased.

### BRIEF DESCRIPTION OF THE DRAWINGS

Fig. 1 is a schematic view showing a light guide device according to an embodiment of the present application;
Fig. 2 is a schematic cross sectional view of the light guide device shown in Fig. 1, taken along a plane A-A;
Fig. 3 is a schematic cross sectional view of the light guide device shown in Fig. 1, taken along a plane B-B;
Fig. 4 is a schematic cross sectional view of the light guide device shown in Fig. 1, taken along a plane C-C;
Fig. 5 is a schematic cross sectional view of the light guide device shown in Fig. 1, taken along a plane D-D;
Fig. 6 is a schematic perspective view showing a portion of the light guide device according to an embodiment of the present application; and
Fig. 7 is a schematic view showing a light guide device which does not include sub-surfaces of the light incidence portion shown in Fig. 1 but only includes a light guide body.

### DETAILED DESCRIPTION OF PREFERRED EMBODIMENTS

Embodiments of the present application will be explained in detail by ways of examples with reference to the accompanying drawings below. Throughout the description, same or similar reference numerals represent same or similar parts. The following description of the embodiments with reference to the drawings is intended to explain the general inventive concept of the present application, instead of limiting the present invention.

In accordance with a general concept of the present application, it provides a light guide device. The light guide device comprises: a light incidence portion and a light guide body, wherein the light incidence portion includes: a first end having an end face with a shape of polygon for receiving an incident light; a second end arranged opposite to the first end and connected to the light guide body, the second end being arranged to direct the incident light from the first end into the light guide body; and a side surface arranged between the first end and the second end, the side surface comprising at least two sub-surfaces arranged side by side, and each of the at least two sub-surfaces extends from one side of the end face of the first end to the second end.

In addition, in the following detailed description, for purposes of explanation, numerous specific details are set forth in order to provide a thorough understanding of the disclosed embodiments. It will be apparent, however, that one or more embodiments may be practiced without these specific details.

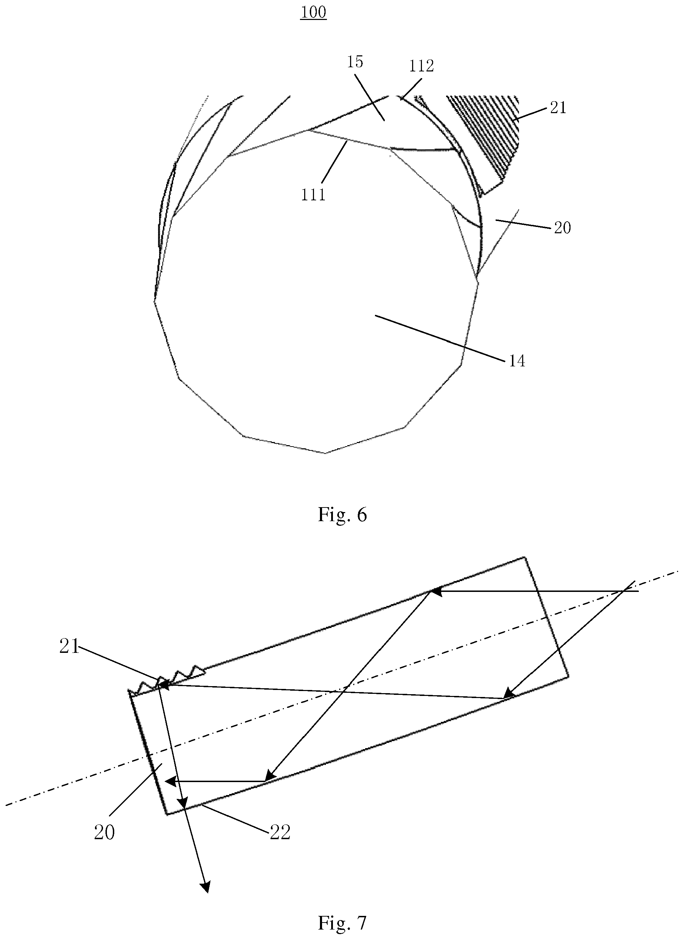

Fig. 7 shows a light guide device. In the light guide device, an incident light directly enters a light guide body 20, and a smooth cylindrical surface of the light guide body 20 acts as a light incidence end. A light (indicated by arrows) is reflected totally by a side wall of the light guide body 20 to be guided substantially along an axis (indicated by a dashed line in the figure) and an optical path of the light will not revolve around the axis.

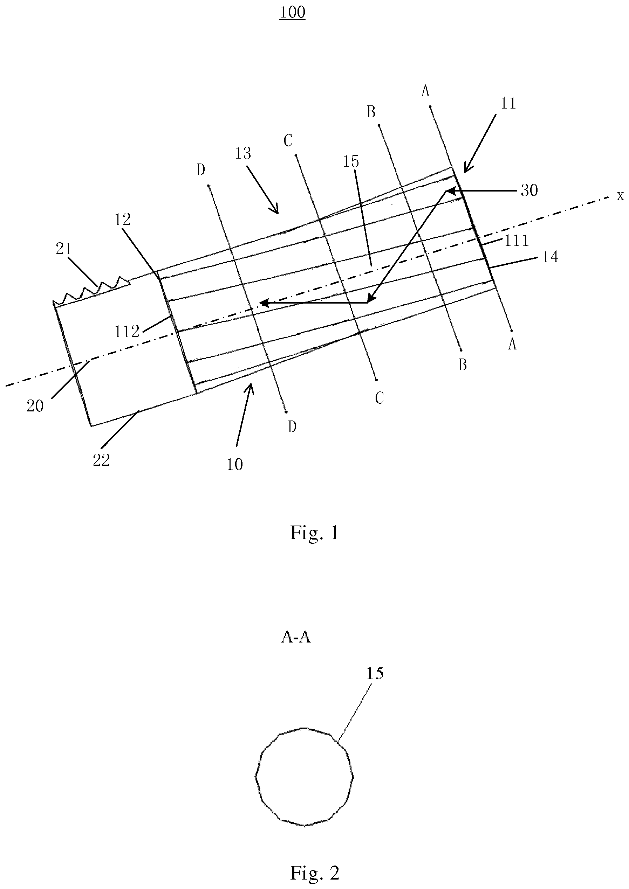

Fig. 1 schematically shows a light guide device 100 according to an embodiment of the present application. The light guide device 100 includes a light incidence portion 10 and a light guide body 20. The light incidence portion 10 has a first end 11, a second end 12 and a side surface 13. The first end 11 has an end face 14 with a shape of polygon for receiving an incident light. The second end 12 is arranged opposite to the first end 11 and connected to the light guide body 20. The second end 12 is arranged to direct the incident light from the first end 11 into the light guide body 20. The side surface 13 is arranged between the first end 11 and the second end 12. The side surface 13 includes at least two sub-surfaces 15 arranged side by side. Each of the at least two sub-surfaces 15 extends from one side of the end face 14 of the first end 11 to the second end 12. As an example, each of the sub-surfaces 15 may extend from one side of the end face 14 of the first end 11 to the second end 12 along a direction inclined with respect to an axis x of the light incidence portion 10. However, embodiments of the present application are not limited to this.

The term of "arranged side by side" means that these sub-surfaces 15 extend from the end face 14 of the first end 11 to the second end 12 along a substantially same direction, in other words, these sub-surfaces 15 are inclined towards a same direction with respect to the axis x of the light incidence portion 10. For example, as shown in Fig. 1, when the light incidence portion 10 is viewed just from the front of the end face 14 (viewed along a direction from right to left in Fig. 1, also referring to Fig. 6), all of the sub-surfaces 15 are inclined towards the same direction (the clockwise direction in the example shown in Fig. 1; of course, alternatively, they may be inclined along the anti-clockwise direction) when these sub-surfaces 15 extend from the end face 14 of the first end 11 to the second end 12. However, it is not necessary that the extending directions of all of the sub-surfaces 15 are absolutely parallel to each other.

In an embodiment of the present application, the extending directions of all of the sub-surfaces 15 from the end face 14 of the first end 11 to the second end 12 are not limited to straight lines, but may be twisted or curved lines alternatively.

In the above embodiment of the present application, the light incidence portion 10 is arranged to couple the incident light into the light guide device 100. A plurality of the sub-surfaces 15 are provided on the side surface 13 of the light incidence portion 10. The side surface 13 of the light incidence portion 10 is not a smooth cylindrical surface. The plurality of the sub-surfaces 15 extend along a direction inclined with respect to the axis x of the light incidence portion 10. It may cause the incident light to travel to the second end 12 in such a way that it does not travel absolutely along the axis x after the incident light has been reflected by one of the plurality of the sub-surfaces 15. Instead, the incident light may revolve around the axis x to some extent while it travels towards the second end 12 along the axis x (the example of the traveling path of the light 30 is shown in Fig. 1). It may increase the length of path and number of times of reflection of the incident light in the incident light coupling portion of the light guide device, in comparison with the case that the smooth cylindrical surface acts as the light incidence portion (shown in Fig. 7). In this way, the incident light can be coupled into the light guide device 100 more uniformly and efficiently. In addition, as the length of path and number of times of reflection of the incident light in the light incidence portion increase, it is helpful to reduce the length of the incident light coupling portion (such as the light incidence portion 10) of the light guide device. It may also increase uniformity of the light intensity distribution in the light incidence portion of the light guide device 100.

In an example, each of the sub-surfaces 15 may have a first side 111 at the first end 11 of the light incidence portion 10 and a second side 112 at the second end 12 of the light incidence portion 10. The second side 112 may revolve clockwise or anticlockwise by an angle greater than zero degree around an axis x of the light incidence portion 10 with respect to the first side 111. That is, the sub-surfaces 15 are twisted while they extend from the first end 11 of the light incidence portion 10 to the second end 12 of the light incidence portion 10. It facilitates the deflection of the incident light after being reflected by the sub-surfaces 15, so as to further increase the length of path and the number of times of reflection of the incident light. As an example, the incident light may be reflected continuously by the plurality of the sub-surfaces 15 to increase uniformity of the light intensity distribution in the light incidence portion 10.

As an example, the second side 112 may revolve clockwise or anticlockwise around the axis x of the light incidence portion 10 with respect to the first side 111 by any angle greater than 0 degrees and less than 360 degrees, for example, by an angle greater than 10 degrees and less than 60 degrees, such as by an angle of about 20 degrees. As an example, the sub-surfaces 15 may be planar, or may be in a form of curved surface. As an example, the sub-surfaces 15 may be planar in an unfolded drawing of the side surface 13 of the light incidence portion 10 along a direction perpendicular to the axis x of the light incidence portion 10. It may reduce the difficulty of manufacturing the sub-surfaces 15. As an example, the sub-surfaces 15 may also be three-dimensional curved surfaces, to satisfy the requirements of the structure design better.

In an example, the end face 14 of the first end 11 of the light incidence portion 10 may have a shape of regular polygon. It facilitates that the incident light is reflected more uniformly by the sub-surfaces 15 in the light incidence portion 10. However, embodiments of the present application are not limited to this. For example, the end face 14 may alternatively have a shape other than the regular polygon. In an example, the light incidence portion 10 may have a circular cross section at the second end 12. The circular cross section may have a diameter greater than or equal to a diameter of a circumcircle of the end face 14 of the first end 11. It may ensure that a reflection angle of the incident light at the sub-surfaces 15 will not be reduced in comparison with the case that the smooth cylindrical surface acts as the incident light coupling portion (for example the case shown in Fig. 7), so as to ensure relatively high optical efficiency. However, embodiments of the present application are not limited to this. For example, the diameter of the cross section of the light incidence portion 10 at the second end 12 may alternatively be less than the diameter of the circumcircle of the end face 14 of the first end 11. In another example, the cross section of the light incidence portion 10 at the second end 12 may also have a shape of polygon. The cross section of the light incidence portion 10 at the second end 12 may have the same shape as the cross section of the end of the light guide body 20 connected to the second end 12 of the light incidence portion 10, or alternatively may have different shape from the shape of the cross section of the end of the light guide body 20 connected to the second end 12 of the light incidence portion 10, as long as the incident light beam from the light incidence portion 10 can be coupled into the light guide body 20.

In case that the circular cross section of the second end 12 of the light incidence portion 10 has a diameter greater than the diameter of the circumcircle of the end face of the first end 11, as an example, the diameter of the circumcircle of the cross section of the light incidence portion 10 may increase gradually from the first end 11 to the second end 12. It may achieve smooth transition of the side surface 13 of the light incidence portion 10, so as to avoid non-uniformity of the light intensity distribution in the light incidence portion 10 due to sudden change in shape of the side surface 13.

As an example, the diameter of the circumcircle of the cross section of the light incidence portion 10 may alternatively be substantially constant. For example, the diameter of the circumcircle of the cross section of the whole light incidence portion 10 may have an extent of variation (difference between the maximum diameter and the minimum diameter) not greater than 10 percent of the diameter of the cross section of the second end 12 of the light incidence portion 10.

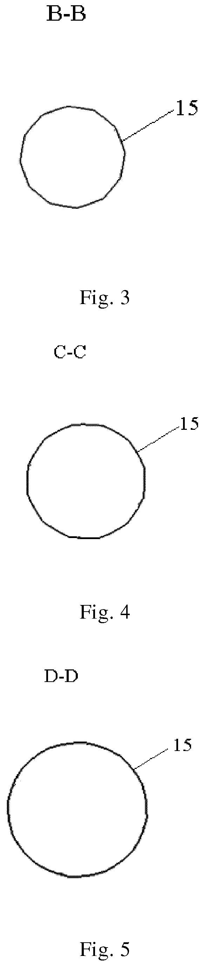

In an example, the shape of the cross section of the light incidence portion 10 may change gradually from the regular polygon at the first end 11 to the circle at the second end 12. As illustrated in Fig. 1 to Fig. 5, the plane A-A coincides with the end face 14 of the first end 11. Thus, Fig. 2 shows the polygon shape of the end face 14. The plane B-B, the plane C-C and the plane D-D are arranged sequentially along a direction towards the second end 12 from the first end 11. It can be seen from Fig. 2 to Fig. 5 that, as the distance between the plane and the second end 12 decrease gradually, the shape of the cross section of the light incidence portion 10 in the plane more and more approximates to a circle. It can ensure smooth transition of the shape of the side surface 13 of the light incidence portion 10, so as to further increase uniformity of the light intensity and optical efficiency.

In an example, the end face 14 of the first end 11 having the shape of polygon may have 4 to 16 sides, for example, may have 8 or 12 sides. Increasing number of the sides of the end face 14 may also increase uniformity of the light intensity.

As an example, the side surface 13 may be provided with such as two, three, four, five, six, seven, eight, nine, ten, eleven, twelve, thirteen, fourteen, fifteen or sixteen or more sub-surfaces 15.

In an example, at least one sub-surface 15 of the at least two sub-surfaces 15 may be arranged to totally reflect the incident light from the first end 11 to another sub-surface 15 of the at least two of sub-surfaces 15. The incident light travels among different sub-surfaces by means of total reflection, so as to form a roundabout optical path. In this way, the uniformity of light intensity and optical efficiency can be increased.

As an example, the light guide body 20 may have circular cross section. For example, the light guide body 20 may be a rigid or flexible cylinder. However, embodiments of the present application are not limited to this. For example, the light guide body 20 may have a more complicated shape as long as the light having been coupled through the light incidence portion 10 into the light guide body 20 still satisfies the requirements of the light guide device for light transmission, for example, total reflection conditions to achieve the desired function.

In an example, a decoupling structure 21, such as a decoupling reflective surface, is provided on a side wall of the light guide body 20. The light guide body 20 guides the light entering the end of the light guide device by means of total reflection, thus, in the light guide body 20, it is typically necessary that the incident light satisfies the total reflection condition at the side wall of the light guide body 20. However, if it is desired that the light in the light guide body 20 exits from a predetermined position, it will be necessary to destroy the total reflection condition for the light at the predetermined position. For example, the decoupling structure 21 (for example, formed by such as prisms) may be provided in at least one region on one side of the light guide body 20. The decoupling structure 21 has a function of destroying the total reflection condition for the light in the light guide body 20, such that the light having been reflected by the decoupling structure 21 to the side wall of the light guide body 20 is not reflected totally, but exits from the light guide body 20. As an example, the decoupling structure 21 may be inclined with respect to the side wall of the light guide body 20. The specific inclination angle depends on refractivity of the light guide body 20 and the incident angle of the light. As an example, a decoupling surface 22 is provided on a side of the side wall opposite to the decoupling structure 21. The light reflected by the decoupling structure 21 for example may exit from the light guide body 20 through the decoupling surface 22.

Fig. 6 is a schematic perspective view showing a portion of the light guide device 100 according to an embodiment of the present application. It is viewed from one side of the first end 11 of the light incidence portion 10. In the figure, it can be clearly seen that the sub-surfaces 15 are inclined and twisted while it extends.

In the embodiments of the present application, the second end 12 of the light incidence portion 10 may be molded integrally with the light guide body 20, or alternatively may be joined with the light guide body 20 such as by splicing.

As an example, in order to increase optical efficiency, the reflection of the light by the sub-surfaces 15 should satisfy the total reflection condition. However, it is not absolutely necessary. As an example, it is also permitted that the reflection of the incident light at certain local part of the sub-surfaces 15 does not satisfy the total reflection condition.

As an example, the light guide device 100 may be made from transparent glass, resin or plastic materials, for example, PMMA (polymethy methacrylate) or polycarbonate.

In the embodiments of the present application, the light guide device 100 may be supported or suspended by any known suitable devices for holding optical elements, for example a supporting seat, a suspension arm or the like.

The light guide device 100 according to the embodiments of the present application for example may be used in any lighting and/or signaling apparatus. The lighting and/or signaling apparatus may include any types of illumination lamps and/or signaling lamps for an automobile vehicle, for example, headlamps, central high mounted stop lamps, turn indicators, position lamps, rear stop lamps and so on. The light guide device 100 according to embodiments of the present application may also be used in any fields other than the vehicle lamps, for example, streetlamps, advertising lamps and so on.

The present disclosure has been described with reference to drawings. However, the examples shown in drawings are intended to exemplarily illustrate the embodiments of the present application by way of examples, instead of limiting the present invention. Scales in the drawings are only provided by way of examples, and are not intended to limit the present invention.

Although some of embodiments according to a general concept of the present disclosure have been illustrated and explained, the skilled person in the art will understand that these embodiments may be modified without departing from principles and spirits of the present disclosure. The scope of the present invention will be defined by the appended claims and equivalents thereof.

## Claims

1. A light guide device (100) comprising:
a light incidence portion (10) and a light guide body (20),
wherein the light incidence portion (10) comprises:
a first end (11) having an end face (14) with a shape of polygon for receiving an incident light;
a second end (12) arranged opposite to the first end (11) and connected to the light guide body (20), the second end (12) being arranged to direct the incident light from the first end (11) into the light guide body (20); and
a side surface (13) arranged between the first end (11) and the second end (12), the side surface (13) comprising at least two sub-surfaces (15) arranged side by side, wherein each of the at least two sub-surfaces (15) extends from one side of the end face (14) of the first end (11) to the second end (12).

2. The light guide device (100) according to claim 1, wherein each of the at least two sub-surfaces (15) extends from one side of the end face (14) of the first end (11) to the second end (12) along a direction inclined with respect to an axis (x) of the light incidence portion (10).

3. The light guide device (100) according to claim 1, wherein each of the at least two sub-surfaces (15) has a first side (111) at the first end (11) of the light incidence portion (10) and a second side (112) at the second end (12) of the light incidence portion (10), and wherein the second side (112) revolves around an axis (x) of the light incidence portion (10) clockwise or anticlockwise by an angle greater than zero degree with respect to the first side (111).

4. The light guide device (100) according to claim 3, wherein the second side (112) revolves around the axis (x) of the light incidence portion (10) clockwise or anticlockwise by an angle greater than 10 degrees and less than 60 degrees with respect to the first side (111).

5. The light guide device (100) according to claim 1, wherein the end face (14) of the first end (11) of the light incidence portion (10) has a shape of regular polygon.

6. The light guide device (100) according to claim 5, wherein the light incidence portion (10) has a circular cross section at the second end (12) and the circular cross section has a diameter greater than or equal to a diameter of a circumcircle of the end face (14) of the first end (11).

7. The light guide device (100) according to claim 6, wherein the shape of the cross section of the light incidence portion (10) changes gradually from the regular polygon at the first end (11) to the circle at the second end (12).

8. The light guide device (100) according to claim 5, wherein a diameter of a circumcircle of a cross section of the light incidence portion (10) increases gradually from the first end (11) to the second end (12).

9. The light guide device (100) according to claim 5, wherein a diameter of a circumcircle of a cross section of the light incidence portion (10) is substantially constant.

10. The light guide device (100) according to any one of claims 1 to 9, wherein the end face (14) of the first end (11) has 4 to 16 sides.

11. The light guide device (100) according to any one of claims 1 to 9, wherein the sub-surfaces (15) are three dimensional curved surfaces.

12. The light guide device (100) according to any one of claims 1 to 9, wherein at least one sub-surface (15) of the at least two sub-surfaces (15) is arranged to totally reflect the incident light from the first end (11) to another sub-surface (15) of the at least two of sub-surfaces (15).

13. The light guide device (100) according to any one of claims 1 to 9, wherein the light guide body (20) has a circular cross section.

14. The light guide device (100) according to any one of claims 1 to 9, wherein a decoupling structure (21) is provided on a side wall of the light guide body (20).

15. The light guide device (100) according to claim 14, wherein a decoupling surface (22) is provided on a side of the side wall opposite to the decoupling structure (21).
